# EUROPÄISCHE PATENTSCHRIFT

(11) **EP 1 615 804 B1**
(45) Veröffentlichungstag und Bekanntmachung des Hinweises auf die Patenterteilung: **03.01.2007**
(21) Anmeldenummer: 03799411.8
(22) Anmeldetag: 18.10.2003
(51) Int. Cl.: B60R 21/01

(54) **VORRICHTUNG ZUR ANSTEUERUNG VON RÜCKHALTEMITTELN**
DEVICE FOR ACTIVATING RESTRAINT MEANS
DISPOSITIF POUR ACTIONNER DES ELEMENTS DE RETENUE

(30) Priorität: 19.03.2003 DE 10312105
(43) Veröffentlichungstag der Anmeldung: 18.01.2006
(73) Patentinhaber: ROBERT BOSCH GMBH, 70442 Stuttgart (DE)
(72) Erfinder: MAIER, Ralf, 70839 Gerlingen (DE); AUST, Sabine, 70192 Stuttgart (DE); LOECKLE, Gerhard, 71634 Ludwigsburg (DE)
(86) Internationale Anmeldenummer: PCT/DE2003/003499
(87) Internationale Veröffentlichungsnummer: WO 2004/083003

(56) Entgegenhaltungen:
- DE-A- 19 811 865
- DE-A- 19 827 557
- DE-A- 19 910 596
- DE-C- 10 138 764

## Beschreibung

### Stand der Technik

Die Erfindung geht aus von einer Vorrichtung zur Ansteuerung von Rückhaltemitteln nach der Gattung des unabhängigen Patentanspruchs.

Aus DE 101 38 764 C1 ist eine gattungsgemäße Vorrichtung zur Ansteuerung eines Rückhaltemittels bekannt, bei dem Crashsensoren innerhalb und außerhalb des Steuergeräts vorhanden sind. Dabei wird mittels der Crashsensoren neben dem Crashsignal auch ein Plausibilitätssignal zur Überprüfung des Crashsignals erzeugt.

DE 199 10 596 A 1 zeigt, dass ein Auslösealgorithmus in Abhängigkeit von einem Signal einer elektronischen Regelung der Fahrdynamik eingestellt werden kann. Dabei kann einerseits die Empfindlichkeit und andererseits die Härte der Auslösung des Airbags beeinflusst werden. DE 198 27 557 A1 offenbart eine Plausibilitätsprüfung eines Crashsensorsignals mittels eines Klopfsensorsignals.

### Vorteile der Erfindung

Die erfindungsgemäße Vorrichtung zur Ansteuerung von Rückhaltemittel mit den Merkmalen des unabhängigen Patentanspruchs hat demgegenüber den Vorteil, dass das Plausibilitätssignal durch systemfremde Fahrzeugsensoren erzeugt wird. Das sind solche Fahrzeugsensoren, die sich außerhalb des Rückhaltesystems befinden, also weder im Steuergerät angeordnet sind, noch Crashsensoren sind, die außerhalb des Steuergeräts sind. Dies kann zu Geschwindigkeitsvorteilen oder aber auch zur kompletten Eliminierung des Plausibilitätssensors führen.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Rückhaltemitteln möglich.

Beispielsweise ließe sich über die Information "Fahrzeug schleudert" aus einer Fahrdynamikregelung (ESP=Elektronisches Stabilitätsprogramm) die Plausibilität, zum Beispiel in einem Seitencrash, als gegeben voraussetzen. Damit entfiele die Wartezeit, bis die Beschleunigung einen Zentralsensor im Steuergerät des Rückhaltesystems erreicht hat. Dies bedeutet einen erheblichen Geschwindigkeitsvorteil und damit eine schnellere Ansteuerung von Rückhaltemitteln.

Weiterhin ist es von Vorteil, wenn die Vorrichtung das Plausibilitätssignal von einer Klopfregelung erhält. Im Motorsteuergerät wird permanent das Körperschallsignal am Motorblock ausgewertet, um das Klopfen des Motors zu erkennen und durch Regeleingriffe zu vermeiden. Dieses Signal könne auf Crashsignaturen überprüft werden, um daraus eine Plausibilisierung der herkömmlichen Auslöseentscheidung abzuleiten. Damit könnte der Einbau eines zusätzlichen Plausibilitätssensors entfallen.

Werden zusätzlich herkömmliche Plausibilitätssensoren verwendet, dann kann durch eine Veroderung des Plausibilitätssignals des Crashsensors und des Fahrzeugsensors ein Plausibilitätssignal insgesamt erzeugt werden und dies zur Auslöseentscheidung herangezogen werden.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: ein Ablaufdiagramm auf der erfindungsgemäßen Vorrichtung.

### Beschreibung

Airbags gehören seit Jahren zur Sicherheitsausstattung von Kraftfahrzeugen. Zur Auslösung des pyrotechnischen Systems wird in der Software des elektrischen Steuergeräts ein Algorithmus gerechnet. Eingangsgrößen in diesen Algorithmus sind in der Regel Sensorsignale zur Erfassung der Crashschwere, beispielsweise Beschleunigungssignale und Drucksignale, sowie Informationen über Insassenbelegung, das Schließen von Gurtschlössem, u.s.w..

Um Fehlauslösungen durch defekte Sensoren vorzubeugen gilt es als wichtigstes Prinzip, dass die Auslöseentscheidung plausibilisiert werden muss. Dies erfolgt im Idealfall über einen unabhängigen Sensor.

Bei den momentan verwendeten Plausibilitätskonzepten sind im Wesentlichen zwei Probleme zu beobachten:

### 1. Zusatzkosten

Wird beispielsweise zur Plausibilisierung des Beschleunigungssignals in X-Richtung, also in Fahrtrichtung, ein zusätzlicher X-Sensor eingesetzt, entstehen Kosten, die lediglich dem Sicherheitskonzept dienen, aber keinen zusätzlichen erlebbaren Kundennutzen beinhalten.

### 2. Performance

Wird beispielsweise zur Detektion eines Seitencrashes ein peripherer Sensor in der Crashzone verwendet, könnte zwar schnell die Auslöseentscheidung getroffen werden, anschließend aber müsste noch auf die Plausibilität des Sicherheitssensors im Zentralgerät gewartet werden. Das liegt daran, dass Beschleunigungen dort erst einige Millisekunden später messbar sind.

Es wird nun erfindungsgemäß vorgeschlagen, statt einen Sensor des Rückhaltesystems zur Plausibilisierung zu verwenden, eine quasi systemfremde Information zur Plausibilisierung des Crashes einzusetzen. Dies könnte entweder zu Geschwindigkeitsvorteilen oder gegebenenfalls auch zur kompletten Eliminierung des Plausibilitätssensors führen.

Ein Beispiel für eine solche systemfremde Information ist das Signal des ESP. Über die Information "Fahrzeug schleudert" ließe sich die Plausibilität beispielsweise im Seitencrash als gegeben voraussetzen. Somit entfiele die Wartezeit, bis die Beschleunigung den Zentralsensor erreicht hat.

Eine weitere Alternative ist das Körperschallsignal der Klopfregelung. Dieses Körperschallsignal, das permanent aufgenommen wird, kann auf Crashsignaturen untersucht werden um damit über die Mustererkennung einen Crash oder crashrelevante Signale zu identifizieren. Diese können dann als Plausibilitätssignal dienen.

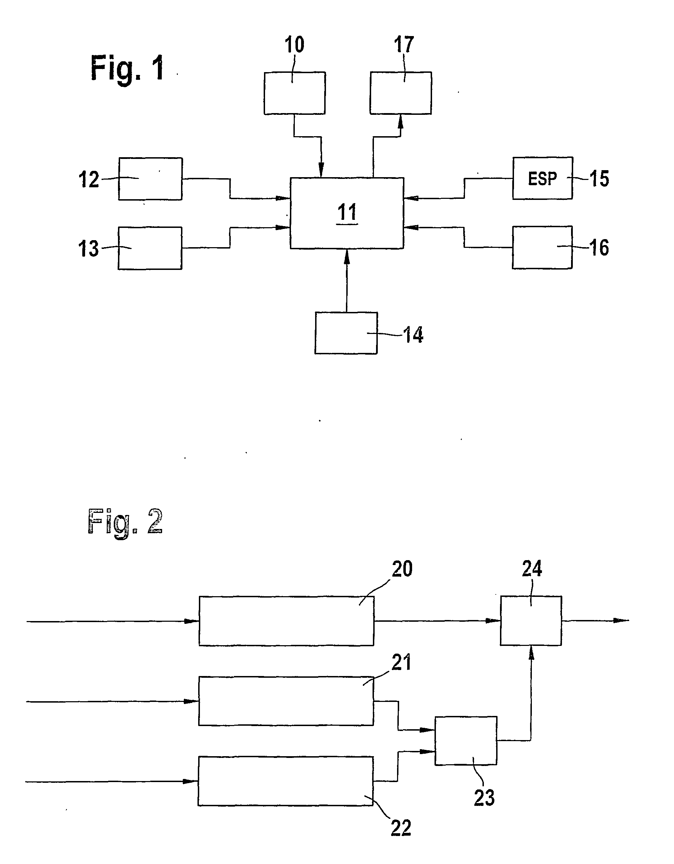

Figur 1 zeigt in einen Blockschaltbild die erfindungsgemäße Vorrichtung. Ein Steuergerät 11, das üblicherweise am Tunnel des Fahrzeugs angebracht ist, ist über einen ersten Dateneingang mit einem Seitenaufprallsensor 10 verbunden. Über einen zweiten Dateneingang ist das Steuergerät 11 mit einem Seitenaufprallsensor 14 an der gegenüberliegenden Seite verbunden. Die Seitenaufprallsensoren 10 und 14 können hier Beschleunigungssensoren sein. Alternativ ist es möglich, dass es sich dabei um Drucksensoren handelt, die einen adiabatischen Druckanstieg in einem Hohlkörper in den Seitenteilen des Fahrzeugs erfassen, der durch die Verformung dieses Hohlkörpers durch einen Seitenaufprall eintritt. Es sind auch andere Verformungssensoren hier verwendbar. Über einen dritten und vierten Dateneingang sind an das Steuergerät 11 Upfrontsensoren 12 und 13 angeschlossen, die am Kühler befestigt sind. Dabei handelt es sich hier um Beschleunigungssensoren, die zumindest in Fahrtrichtung die Beschleunigung erfassen. Es ist möglich, dass sie auch Beschleunigungen quer zur Fahrtrichtung, in Y-Richtung, und in Vertikalrichtung erfassen können. Über einen fünften Dateneingang ist das Steuergerät 11 mit einem ESP-Steuergerät 15 verbunden und über einen sechsten Dateneingang ist das Steuergerät 11 mit einer Klopfregelung 16 verbunden.

Das Steuergerät 11 weist selbst einen Prozessorspeicher und eigene Sensoren auf, um aus den Crashsignalen der Sensoren 10, 12, 13 und 14 einen Auslösealgorithmus für Rückhaltemittel 17 zu berechnen. Die Rückhaltemittel 17, mit denen das Steuergerät 11 über einen Datenausgang verbunden ist, sind Airbags, Gurtstraffer und gegebenenfalls ein Überrollbügel. Die Sensoren 10, 12, 13 und 14 sind ausgelagert, um näher an dem Crashort zu sein. Dies ermöglicht eine schnellere Erfassung von Crashsignalen. Der Algorithmus, der im Prozessor des Steuergeräts 11 abläuft, benötigt jedoch auch Plausibilitätssignale, um Ausfälle oder Fehler der Crashsensoren 10, 12, 13 und 14 zu erkennen. Dazu kann das Steuergerät 11 entweder Signale der Crashsensoren selbst verwenden, beispielsweise die gegenseitige Plausibilität der Seitenaufprallsensoren 10 und 14 oder auch von Sensoren im Steuergerät 11 selbst, also von Zentralsensoren. Erfindungsgemäß wird nun vorgeschlagen, dass zur Plausibilität auch Signale des ESP-Steuergeräts 15 zur Fahrdynamikregelung und der Klopfregelung 16 verwendet werden können. Das ESP-Steuergerät 15 zeigt den Fahrdynamikzustand an und lässt damit einen Rückschluss auf einen eventuellen Crash zu. Die Klopfregelung 16 überwacht permanent ein Körperschallsignal am Motorblock und auch dieses Körperschallsignal kann Crashsignaturen enthalten, die eine Identifikation eines solchen Crashes ermöglichen. Werden diese beiden oder eine davon verwendet, dann kann auf eine Plausibilität mittels Crashsensoren gegebenenfalls sogar verzichtet werden.

Figur 2 zeigt ein Ablaufdiagramm des Verfahrens, das auf der erfindungsgemäßen Vorrichtung abläuft. Im Block 20 wird der Algorithmus zur Bildung der Auslöseentscheidung gerechnet. Dafür erhält das Steuergerät 11 von den Sensoren 10, 12, 13 und 14 auslöserelevante Sensorsignale. Gleichzeitig wird eine Plausibilitätsprüfung in den Blöcken 21 und 22 durchgeführt. Diese Plausibilitätsprüfung wird im Block 21 an einem herkömmlichen Plausibilitätssignal, also an einem Signal eines der Crashsensoren 10, 12, 13 oder 14 oder eines Zentralsensors im Steuergerät 11 durchgeführt. Dort kann auch ein mechanischer Schalter, beispielsweise ein Hämlinschalter, verwendet werden. Nun wird zusätzlich im Block 22 eine Plausibilitätsüberprüfung anhand der Signale des ESP-Steuergeräts 15 bzw. der Klopfregelung 16 durchgeführt. Die Plausibilitätsprüfungen der Blöcke 21 und 22 werden dann im Block 22 miteinander verodert. D.h., zeigt nur ein einziger Block 21 oder 22 ein Plausibilitätssignal an, dann wird am Ausgang des ODER-Gatters 23 eine logische eins sein, die anzeigt, dass das Plausibilitätssignal für einen Crash vorliegt. Das ODER-Gatter 23 ist an einen ersten Eingang eines UND-Gatters 24 angeschlossen. An einen zweiten Eingang ist der Block 20 angeschlossen, der die Auslöseentscheidung ausgibt. Ist die Auslöseentscheidung JA und wurde ein Plausibilitätssignal erkannt, dann wird am Ausgang des UND-Gatters 24 der Feuerbefehl abgegeben. Ist keine Auslöseentscheidung gebildet worden oder kein Plausibilitätssignal vorhanden, dann wird kein Feuerbefehl abgegeben.

Alternativ ist es möglich, dass lediglich der untere Block 22 verwendet wird, wobei dann auf das ODER-Gatter 23 verzichtet werden kann. Dann wird lediglich die Auslöseentscheidung des Blocks 20 und die Plausibilitätsprüfung des Blocks 22 miteinander verundet. Wenn beide vorliegen, kommt es zu einem Feuerbefehl. Wenn nur eines fehlt, kommt es zu keinem Feuerbefehl.

## Patentansprüche

1. Vorrichtung zur Ansteuerung von Rückhaltemitteln (17), wobei die Vorrichtung Crashsensoren (10, 12, 13, 14) innerhalb und außerhalb eines Steuergeräts (11) aufweist, wobei die Vorrichtung derart konfiguriert ist, dass die Vorrichtung das Crashsignal mit einem Plausibilitätssignal überprüft, wobei die Vorrichtung derart konfiguriert ist, dass die Vorrichtung das Plausibilitätssignal von einem Fahrzeugsensor (15, 16) außerhalb des Steuergeräts (11) zur Überprüfung des Crashsignals verwendet und dann die Rückhaltemittel (17) in Abhängigkeit von dem Crashsignal und dem Plausibilitätssignal ansteuert, **dadurch gekennzeichnet, dass** die Vorrichtung von einer Fahrdynamikregelung (15) das Plausibilitätssignal erhält.

2. Vorrichtung nach Anspruch 1, **dadurch gekennzeichnet, dass** das erste Plausibilitätssignal von der Fahrdynamikregelung (15) zur Plausibilisierung des Crashsignals eines Seitenaufprallsensors (10, 14) verwendet wird.

3. Vorrichtung nach Anspruch 1, **dadurch gekennzeichnet, dass** die Vorrichtung das erste Plausibilitätssignal von einer Klopfregelung (16) erhält.

4. Vorrichtung nach Anspruch 3, **dadurch gekennzeichnet, dass** die Klopfregelung (16) ein Körperschallsignal auf eine Crashsignatur hin auswertet und das erste Plausibilitätssignal in Abhängigkeit von der Crashsignatur erzeugt.

5. Vorrichtung nach Anspruch 1, **dadurch gekennzeichnet, dass** die Vorrichtung ein zweites Plausibilitätssignal durch wenigstens einen der Crashsensoren (10, 12, 13, 14) erzeugt und die Rückhaltemittel in Abhängigkeit von dem Crashsignal und dem ersten oder zweiten Plausibilitätssignal ansteuert.

## Claims

1. Device for activating restraint means (17), the device having crash sensors (10, 12, 13, 14) within and outside a control unit (11), the device being configured in such a manner that the device checks the crash signal with a plausibility signal, the device being configured in such a manner that the device uses the plausibility signal from a vehicle sensor (15, 16) outside the control unit (11) to check the crash signal and then activates the restraint means (17) as a function of the crash signal and the plausibility signal, **characterized in that** the device obtains the plausibility signal from a driving dynamics control system (15).

2. Device according to Claim 1, **characterized in that** the first plausibility signal from the driving dynamics control system (15) is used to check the plausibility of the crash signal of a side impact sensor (10, 14).

3. Device according to Claim 1, **characterized in that** the device obtains the first plausibility signal from a knock control system (16).

4. Device according to Claim 3, **characterized in that** the knock control system (16) evaluates a structure-borne noise signal for a crash signature and produces the first plausibility signal as a function of the crash signature.

5. Device according to Claim 1, **characterized in that** the device produces a second plausibility signal by means of at least one of the crash sensors (10, 12, 13, 14) and activates the restraint means as a function of the crash signal and the first or second plausibility signal.

## Revendications

1. Dispositif de commande de moyens de retenue (17), présentant des capteurs de collision (10, 12, 13, 14) à l'intérieur et à l'extérieur d'un appareil de commande (11), configuré pour vérifier le signal de collision à l'aide d'un signal de plausibilité, et également pour utiliser le signal de plausibilité d'un capteur du véhicule (15, 16) situé à l'extérieur de l'appareil de commande (11) pour vérifier le signal de collision, puis commander les moyens de retenue (17) en fonction du signal de collision et du signal de plausibilité,
**caractérisé en ce que**
le dispositif reçoit le signal de plausibilité à partir d'un système de contrôle dynamique de trajectoire (15).

2. Dispositif selon la revendication 1,
**caractérisé en ce que**
le premier signal de plausibilité provenant du système de contrôle dynamique de trajectoire (15) est utilisé pour évaluer la plausibilité du signal de collision d'un capteur de choc latéral (10, 14).

3. Dispositif selon la revendication 1,
**caractérisé en ce que**
le dispositif reçoit le premier signal de plausibilité à partir d'une régulation anticliquetis (16).

4. Dispositif selon la revendication 3,
**caractérisé en ce que**
la régulation anticliquetis (16) exploite un signal de bruits d'impact vis-à-vis d'une signature de collision et génère le premier signal de plausibilité en fonction de la signature de collision.

5. Dispositif selon la revendication 1,
**caractérisé en ce que**
le dispositif génère un deuxième signal de plausibilité par au moins l'un des capteurs de collision (10, 12, 13, 14) et commande les moyens de retenue en fonction du signal de collision et du premier ou deuxième signal de plausibilité.
